# EUROPÄISCHE PATENTSCHRIFT

(11) **EP 0 398 062 B1**
(45) Veröffentlichungstag und Bekanntmachung des Hinweises auf die Patenterteilung: **31.08.1994**
(21) Anmeldenummer: 90108166.1
(22) Anmeldetag: 28.04.1990
(51) Int. Cl.: G01B 11/03, G02B 25/02, G01B 21/00

(54) **Messlupenanordnung**
Device with a measuring glass
Arrangement avec une loupe de mesure

(30) Priorität: 09.05.1989 DE 3915118; 06.11.1989 DE 3936833
(43) Veröffentlichungstag der Anmeldung: 22.11.1990
(73) Patentinhaber: Aristo Graphic Systeme GmbH & Co. KG, D-22525 Hamburg (DE)
(72) Erfinder: Cordes, Werner, D-2000 Hamburg 50 (DE)

(56) Entgegenhaltungen:
- DE-C- 3 520 293

## Beschreibung

Die Erfindung bezieht sich auf eine Meßlupenanordnung mit einem in einem Trägerkörper gehaltenen Lupenkörper, der einen Zylinderabschnitt und einen auf diesem vorgesehenen, bezüglich der Zylinderachse rotationssymmetrischen, konvex gekrümmten Linsenabschnitt aufweist, sowie mit einer koaxial zum Zylinderabschnitt angeordneten Auswertespule.

Bei einer bekannten Meßlupenanordnung dieser Art (DE-PS 35 20 293), die zur Verwendung in Zusammenhang mit Digitalisiertabletts bestimmt ist, ist im äußeren Umfangsbereich des Zylinderabschnittes eine Auswertespule zur Erzeugung oder zur Auswertung eines Magnetfeldes befestigt, die derart liegt, daß sie sich im Bereich zwischen Umfangsfläche des Zylinderabschnittes und dem Verlauf des Randstrahls des Linsenabschnittes durch den Zylinderabschnitt befindet. Dadurch ist sie bei Betrachtung der Unterlage durch den Lupenkörper für den Benutzer nicht sichtbar, denn der lotrecht bezüglich der Unterlage auf den äußeren Rand des Linsenabschnittes fallende Lichtstrahl wird durch den Linsenkörper so nach innen in Richtung auf die Zylinderachse gebrochen, daß zwischen ihm und der äußeren Umfangsfläche des Zylinderabschnittes ein Bereich verbleibt, der infolge des optischen Verlaufes des Randstrahls für den Betrachter nicht erkennbar ist. Dadurch ist auch die in diesem Bereich befindliche Auswertespule nicht sichtbar, ohne daß der Betrachter dabei den Eindruck hätte, daß ein Teil des Linsenkörpers "undurchsichtig" wäre.

Die Auswertespule dieser bekannten Meßlupenanordnung erstreckt sich mit ihren Anschlußenden aus dem Bereich des Zylinderkörpers und in den Trägerkörper, um auf diese Weise mit einer am Trägerkörper gehalterten Schaltungsanordnung verbunden zu werden.

Die Hersteller von Digitalisiertabletts liefern im allgemeinen für unterschiedliche Typen von Digitalisiertabletts Meßlupenanordnungen, die unterschiedliche Lupenkörper enthalten, so daß für jeden Typ eines Digitalisiertabletts eine Lupenanordnung mit an diesem Typ angepaßtem Lupenkörper und diesen fest aufnehmendem Trägerkörper verwendet werden muß. Darüber hinaus sind für verschiedene Anwendungsfälle unterschiedliche Lupenkörper geeignet, so daß der Benutzer für diese Anwendungsfälle speziell ausgebildete Meßlupenanordnungen benötigt, was teuer ist.

Es ist Aufgabe der Erfindung, eine Meßlupenanordnung zu schaffen, die sich leicht an unterschiedliche Typen von Digitalisiertabletts und/oder an unterschiedliche Anwendungsfälle anpassen läßt.

Zur Lösung dieser Aufgabe wird eine Meßlupenanordnung der eingangs erwähnten Art erfindungsgemäß derart ausgestaltet, daß der Lupenkörper lösbar im Trägerkörper gehalten ist und daß die Auswertespule radial außerhalb des Verlaufs des Randstrahls des Linsenabschnittes im Trägerkörper befestigt ist.

Bei der erfindungsgemäßen Meßlupenanordnung liegt also, wie bei der bekannten Meßlupenanordnung, die Auswertespule außerhalb des durch den Lupenkörper sichtbaren Bereiches, jedoch in dem den Lupenkörper aufnehmenden Trägerkörper, so daß die galvanische Verbindung zwischen Auswertespule und der zugehörigen Schaltungsanordnung ebenfalls vollständig im Trägerkörper verläuft. Der Lupenkörper ist lösbar im Trägerkörper gehalten, so daß in den Trägerkörper wahlweise unterschiedliche Lupenkörper eingesetzt werden können, wodurch der Hersteller in Anpassung an den jeweiligen Typ des Digitalisiertabletts, für den die Meßlupe bestimmt ist, und der Benutzer in Anpassung an den jeweiligen Anwendungsfall einen Lupenkörper mit den geeigneten optischen Eigenschaften einsetzen kann, ohne daß sonstige Veränderungen an der Meßlupenanordnung erforderlich wären.

Der Lupenkörper kann an seiner Unterseite ein Fadenkreuz aufweisen, um so eine genaue Positionierung bezüglich zu digitalisierenden Punkten zu ermöglichen.

Bei der erfindungsgemäßen Meßlupenanordnung kann bei unsachgemäßer Handhabung der eingesteckte Lupenkörper aus seiner Halterung im Trägerkörper nach oben herausgedrückt werden. Dies stellt zwar kein ernsthaftes Problem dar, wenn die Verlagerung des Lupenkörpers so erfolgt, daß er nicht mehr im Trägerkörper gehalten ist, weil dann der Benutzer diese Fehlanordnung sofort feststellt. Wenn jedoch nur eine verhältnismäßig geringfügige Verlagerung des Lupenkörpers bezüglich dem Trägerkörper stattgefunden hat, kann es vorkommen, daß der Benutzer diese nicht bemerkt und die Meßlupenanordnung weiter benutzt, wodurch es zu Fehlmessungen kommen kann.

Um diese Schwierigkeiten zu vermeiden, kann der in den Trägerkörper eingesetzte Lupenkörper in formschlüssigem Eingriff mit dem Trägerkörper stehen.

Durch einen derartigen formschlüssigen Eingriff zwischen lösbar im Trägerkörper gehaltertem Lupenkörper und Trägerkörper wird erreicht, daß der Lupenkörper sich nicht durch einfachen Druck von unten aus seiner definierten Anordnung innerhalb des Trägerkörpers lösen kann, sondern daß eine Verlagerung des Lupenkörpers nur dann möglich ist, wenn zuvor der formschlüssige Eingriff gelöst wurde.

Zur Herstellung eines formschlüssigen Eingriffes zwischen Lupenkörper und Trägerkörper kann am unmittelbar oberhalb des Trägerkörpers liegenden Umfangsbereich des Lupenkörpers ein mit seinem freien Endabschnitt im wesentlichen in Umfangsrichtung des Lupenkörpers gerichtetes Hakenelement vorgesehen sein, dessen Endabschnitt in lösbarem Eingriff mit einer auf der Oberseite des Trägerkörpers vorgesehenen Aufnahme steht, die zumindest an der der Trägeroberseite gegenüberliegenden Seite einen Abstützbereich aufweist. Das Hakenelement ist vorzugsweise einstückig mit dem Lupenkörper ausgebildet.

Wenn sich im eingesetzten Zustand des Lupenkörpers der freie Endabschnitt des Hakenelementes in die Aufnahme am Trägerkörper erstreckt, stützt diese Aufnahme den freien Endabschnitt des Hakenelementes und damit den gesamten Lupenkörper gegen eine Verlagerung nach oben bezüglich dem Trägerkörper ab, d.h. der Lupenkörper kann nicht versehentlich aus seiner für die Durchführung von Messungen vorgesehenen, definierten Lage im Trägerkörper verlagert werden.

Um den Lupenkörper aus dem Trägerkörper zu lösen, muß er so bezüglich dem Trägerkörper verdreht werden, daß der freie Endabschnitt des Hakenelementes aus der Aufnahme des Trägerkörpers herausgelangt, und dann kann der Lupenkörper ohne nennenswerte Schwierigkeiten nach oben aus dem Trägerkörper herausgedrückt werden.

Um eine definierte Führung des Lupenkörpers beim Verdrehen innerhalb des Trägerkörpers zu erreichen und um insbesondere die Verdrehung in die Stellung mit formschlüssigem Eingriff in definierter Weise zu begrenzen, kann am Lupenkörper unterhalb des Hakenelementes ein Vorsprung ausgebildet sein, der sich bei eingesetztem Lupenkörper in eine in der Wandung der Trägerkörper-Aufnahmeöffnung für den Lupenkörper ausgebildete, nach oben offene Aussparung erstreckt, wobei sich der Vorsprung im Zustand der formschlüssigen Verbindung an einem Ende der Aussparung und bei getrennter formschlüssiger Verbindung am anderen Ende der Aussparung befindet.

In einer Ausgestaltung der Erfindung kann im Zylinderabschnitt im Bereich zwischen dessen Umfangsfläche und dem Verlauf des Randstrahls des Linsenabschnittes durch den Zylinderabschnitt mindestens eine Lampe vorgesehen sein. Zumindest im Mittelbereich zwischen Zylinderabschnitt und Linsenabschnitt ist dann ein Luftspalt ausgebildet, und das von der mindestens einen Lampe abgestrahlte Licht wird an der den Luftspalt begrenzenden Fläche des Zylinderabschnittes totalreflektiert.

Bei einem derartigen Aufbau ist also im infolge der optischen Eigenschaften des Linsenabschnittes vom Betrachter nicht sichtbaren Bereich des Zylinderabschnittes mindestens eine Lampe angeordnet, und das Licht dieser Lampe fällt im Zylinderabschnitt auf eine den Luftspalt zwischen Zylinderabschnitt und Linsenabschnitt begrenzende Fläche des Zylinderabschnittes und wird von dieser Fläche totalreflektiert, d.h. das von der Lampe in Richtung des Linsenabschnittes abgestrahlte Licht wird vom Linsenabschnitt weg reflektiert und fällt auf die mittels der Meßlupenanordnung zu betrachtende Oberfläche, um diese zu beleuchten. Dabei ist, wie vorstehend erwähnt, die eigentliche Lichtquelle für den Benutzer nicht sichtbar, so daß sie die Benutzung der Lupenanordnung nicht beeinträchtigt.

Das auf die zu betrachtende Fläche fallende Licht der mindestens einen Lampe wird entsprechend durch den Zylinderabschnitt reflektiert und gelangt von diesem durch den Linsenabschnitt in das Auge des Betrachters. Nur ein sehr kleiner Teil dieses Lichtes fällt unter einem solchen Winkel wieder auf die den Luftspalt begrenzende Fläche des Zylinderabschnittes, daß es erneut zu einer Totalreflexion kommt.

In diesem Zusammenhang sei erwähnt, daß die Bestimmung der Form der Fläche des Zylinderabschnittes, an der die Totalreflexion stattfinden soll, nach den üblichen Regeln der Optik unter Berücksichtigung der Unterschiede in den optischen Dichten zwischen dem Material des Zylinderabschnittes, üblicherweise Glas oder Acrylglas, und Luft gewählt wird, wobei die Stärke des Luftspaltes möglichst gering sein soll, um optische Verzerrungen zu vermeiden. Die den Luftspalt begrenzende Fläche des Zylinderabschnitts ist dazu im allgemeinen konkav gekrümmt.

Der Luftspalt liegt vorzugsweise zur Zylinderachse rotationssymmetrisch. Er kann sich bis in den Bereich des Randstrahls des Linsenabschnittes erstrecken, um auf diese Weise eine Totalreflexion des gesamten, von der Lampe nach oben und schräg nach oben abgestrahlten Lichtes zu bewirken.

Vorzugsweise sind mehrere, einander paarweise diametral gegenüberliegende Lampen vorhanden, die in einer im Zylinderabschnitt ausgebildeten, radial nach außen offenen Ringnut angeordnet sein können, so daß sie sich leicht einsetzen und entfernen lassen.

Bei einer erfindungsgemäßen Meßlupenanordnung mit Hakenelement am Lupenkörper sowie mit mindestens einer Lampe, können die Anschlußleitungen für die Lampe an an Außenflächen des freien Endabschnittes des Hakenelementes vorgesehenen Kontakten enden, die bei formschlüssiger Verbindung in Eingriff mit mit einer Spannungsquelle verbundenen Kontakten in der Aufnahme stehen. Auf diese Weise lassen sich einerseits die im oder am Lupenkörper verlaufenden Anschlußleitungen für die Lampe auf einfache Weise zu entsprechenden Kontakten führen, und andererseits können dadurch definierte elektrische Verbindungen zwischen den Kontakten am Lupenkörper und den Kontakten am Trägerkörper hergestellt werden, ohne daß der Benutzer besondere zusätzliche Maßnahmen durchführen müßte.

Die Erfindung wird im folgenden anhand der ein Ausführungsbeispiele zeigenden Figuren näher erläutert.
- Figur 1: zeigt in perspektivischer Darstellung eine Meßlupenanordnung.
- Figur 2: zeigt eine Ansicht der Meßlupenanordnung aus Figur 1 von unten.
- Figur 3: zeigt einen Teilschnitt durch die Meßlupenanordnung aus den Figuren 1 und 2 im Bereich des Lupenkörpers.
- Figur 4: zeigt in perspektivischer Darstellung und teilweise aufgebrochen eine andere Meßlupenanordnung.

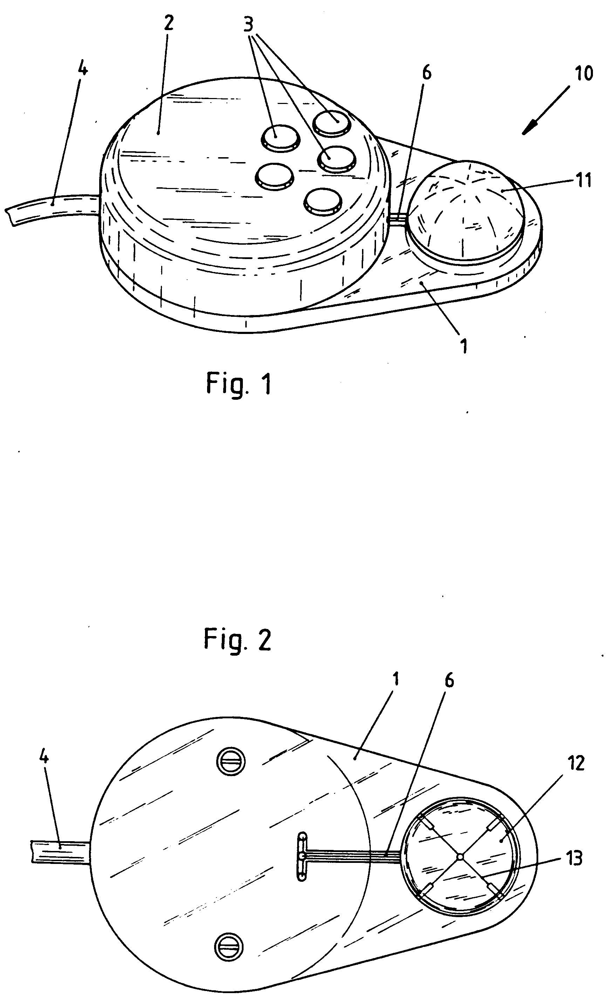

Die in den Figuren 1 bis 3 dargestellte Meßlupenanordnung hat einen ebenen Trägerkörper 1 aus Acrylglas, auf dem mittels Schrauben (Figur 2) ein Gehäuse 2 befestigt ist. Im Gehäuse 2 befindet sich eine Schaltungsanordnung, deren Funktionen mittels der an der Oberseite des Gehäuses 2 vorgesehenen Tasten 3 ausgelöst werden und die über eine Leitung 4 mit einer Verarbeitungsschaltung sowie mit einer Spannungsquelle verbunden ist. Aufbau und Funktion einer solchen Schaltungsanordnung sind bekannt und werden daher nicht erläutert.

Im Trägerkörper 1 befindet sich eine Durchgangsbohrung, und diese ist konzentrisch von einer Auswertespule 5 umgeben, die in eine nach unten offene Ringnut des Trägerkörpers 1 eingesetzt ist und die über Leitungen 6 mit der im Gehäuse 2 vorgesehenen Schaltungsanordnung in Verbindung steht. In die Durchgangsbohrung ist ein Linsenkörper 10 eingesetzt, der beispielsweise auch aus Acrylglas bestehen kann. Der Linsenkörper 10 hat einen Zylinderabschnitt 12 sowie einen Linsenabschnitt 11, der rotationssymmetrisch bezüglich der Zylinderachse 14 gekrümmt ist. Der Linsenabschnitt 11 und der Zylinderabschnitt 12 liegen in ihrem äußeren Umfangsbereich flächig aufeinander und können beispielsweise mittels eines Klebstoffes gleicher optischer Dichte wie das Material von Linsenabschnitt 11 und Zylinderabschnitt 12 fest miteinander verbunden sein. Im Mittelbereich von Linsenabschnitt 11 und Zylinderabschnitt 12 ist zwischen diesen ein enger Luftspalt 15 ausgebildet, der rotationssymmetrisch zur Zylinderachse 14 liegt und der sich bis an den Bereich des Randstrahls 20 erstreckt. Er wird von einer ebenen Fläche 17 des Linsenabschnittes 11 und einer konkaven Fläche 16 des Zylinderabschnittes 12 begrenzt.

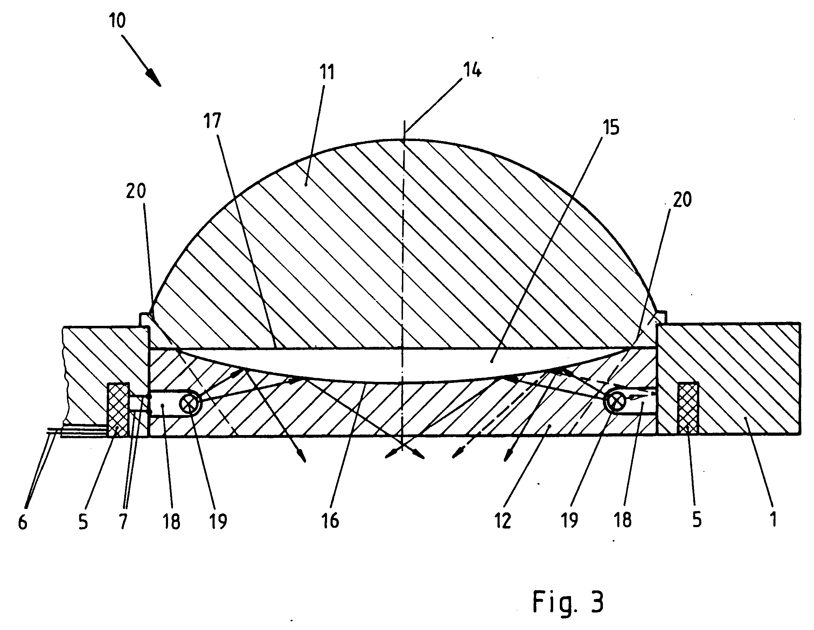

Im äußeren Umfang des Zylinderabschnittes 12 ist eine radial nach außen offene Ringnut 18 vorhanden, in die mehrere Lampen 19 in nicht näher dargestellter Weise eingesetzt sind, so daß sich jeweils zwei dieser Lampen, wie in Figur 3 zu erkennen, diametral gegenüberliegen. Die Lampen 19 sind in nicht dargestellter Weise über Anschlußleitungen mit am äußeren Umfang des Linsenabschnittes 12 vorgesehenen Kontakten verbunden, die bei in den Trägerkörper 1 eingesetztem Linsenkörper 10 in Berührung mit Anschlußleitungen 7 (Figur 3) stehen, die in nicht näher dargestellter Weise ebenfalls in das Gehäuse 2 führen und mit einer Spannungsquelle für die Lampen 19 verbunden sind, wobei zum Ein- und Ausschalten der Lampen 19 eine der Tasten 3 dienen kann.

Da die Lampen 19 ebenso wie die Auswertespule S radial außerhalb desjenigen Bereiches liegen, der nach innen durch den angedeuteten Randstrahl 20 (Figur 3) des Linsenabschnittes 3 begrenzt wird, befinden sich die Lampen 19, wie in der bereits vorstehend erwähnten DE-PS 35 20 293 erläutert, in einem für den Benutzer nicht sichtbaren Bereich.

Das von den Lampen 19 schräg nach oben abgestrahlte Licht fällt, wie durch die Pfeile angedeutet, auf die an den Luftspalt 15 angrenzende konkave Fläche 16 des Zylinderabschnittes 2 und wird an dieser wegen der Form der Fläche 16 und wegen der Differenz der optischen Dichten zwischen dem Material des Zylinderabschnittes 12 und der Luft im Luftspalt 15 totalreflektiert, d.h. das Licht gelangt in der durch die Pfeile angedeuteten Weise auf die durch den Lupenkörper 10 zu betrachtende Oberfläche. Somit wird der zu betrachtende Bereich gut ausgeleuchtet, und der Benutzer kann sowohl die Darstellungen auf der zu betrachtenden Oberfläche als auch das an der Unterseite des Zylinderabschnittes 12 ausgebildete Fadenkreuz 13 (Figur 2) gut erkennen, ohne daß das Vorhandensein der Lichtquelle die Benutzung der Meßlupenanordnung beeinträchtigt.

Wie insbesondere in Figur 3 zu erkennen ist, kann der Lupenkörper 10, der sich mit einer am Linsenabschnitt 11 ausgebildeten Ringschulter auf der Oberseite des Trägerkörpers 1 abstützt, ohne weiteres aus dem Trägerkörper 1 nach oben entfernt werden, und es kann dann ein anderer Lupenkörper mit an die Durchgangsbohrung im Trägerkörper 1 angepaßter Abmessung in den Trägerkörper 1 eingesetzt werden, wobei der neu eingesetzte Lupenkörper beispielsweise andere optische Eigenschaften haben und/oder keine Lampen tragen kann.

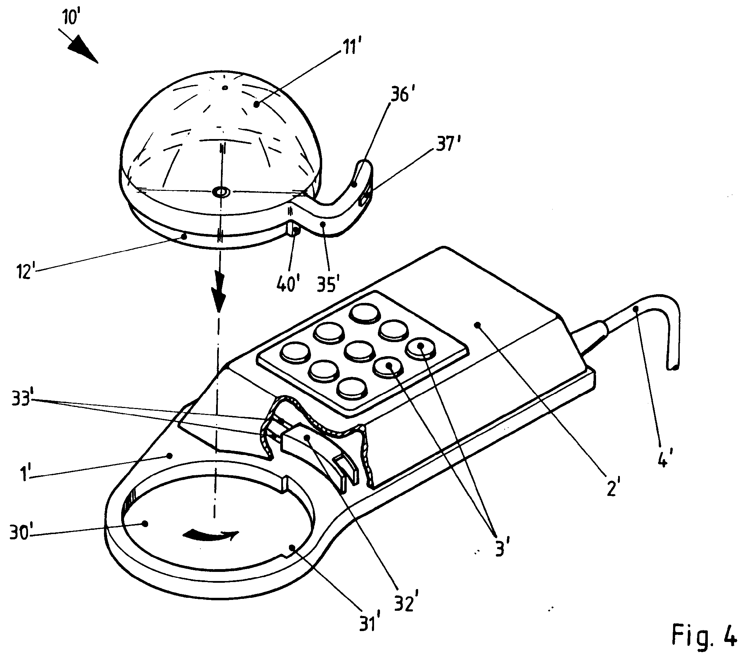

Die in Figur 4 dargestellte Meßlupenanordnung hat einen ebenen Trägerkörper 1′ aus Acrylglas, auf dem in nicht dargestellter Weise ein Gehäuse 2′ befestigt ist. Im Gehäuse 2′ befindet sich eine Schaltungsanordnung, deren Funktionen mittels der an der Oberseite des Gehäuses 2′ vorgesehenen Tasten 3′ ausgelöst werden und die über eine Leitung 4′ mit einer Verarbeitungsschaltung sowie mit einer Spannungsquelle verbunden ist. Aufbau und Funktion einer solchen Schaltungsanordnung sind, wie vorstehend erwähnt, bekannt und werden daher nicht erläutert.

Am Trägerkörper 1′ befindet sich eine Aufnahmeöffnung oder Durchgangsbohrung 30′, und diese ist konzentrisch von einer nicht gezeigten Auswertespule umgeben, wie dies im Ausführungsbeispiel gemäß Figuren 1 bis 3 dargestellt ist.

Der gezeigte Linsenkörper 10′, der beispielsweise auch aus Acrylglas besteht, hat einen Zylinderabschnitt 12′ sowie einen Linsenabschnitt 11′, der rotationssymmetrisch bezüglich der Zylinderachse gekrümmt ist. Der Linsenabschnitt 11′ und der Zylinderabschnitt 12′ können in der in Zusammenhang mit den Figuren 1 bis 3 beschriebenen Weise ausgebildet sein.

Am Linsenkörper 10′ ist im unteren Bereich des Linsenabschnittes 11′ ein Hakenelement 35′ angeformt, dessen freier Endabschnitt 36′ etwa in Umfangsrichtung des Zylinderabschnittes 12′ bzw. des an diesen anschließenden Bereiches des Linsenabschnittes 11′ gekrümmt ist. Unterhalb des Hakenelementes 35′ ist am Zylinderabschnitt 12′ ein Vorsprung 40′ ausgebildet.

Wie in Figur 4 angedeutet, erfolgt das Einsetzen des Linsenkörpers 10′ in den Trägerkörper 1′ in der durch die Pfeile angegebenen Weise, d.h. zunächst wird der Linsenkörper 10′ in die Durchgangsbohrung 30′ eingeführt, so daß sich sein Zylinderabschnitt 12′ in Berührung mit dem Wandbereich der Durchgangsbohrung 30′ befindet. Dabei erfolgt dieses Einsetzen so, daß der Vorsprung 40′ an dem in Figur 4 vorn liegenden Ende eines Ausschnittes 31′ anliegt, der in der Wandung der Durchgangsbohrung 30′ ausgebildet ist und sich in Umfangsrichtung erstreckt. Befindet sich der Linsenkörper 10′ in dieser eingesetzten Lage, erfolgt eine Drehung in Pfeilrichtung, wobei sich der Vorsprung 40′ von dem vorn liegenden Ende des Ausschnittes 31′ zu dem in Figur 4 hinten liegenden Ende verlagert. Bei dieser Drehung kommt der freie Endbereich 36′ des Hakenelementes 35′ in Eingriff mit einer auf der Oberseite des Trägerkörpers 1′ befestigten Aufnahme 32′, die den freien Endbereich 36′ an allen Seiten eng umgibt. Dadurch ist also ein formschlüssiger Eingriff zwischen Linsenkörper 10′ und Trägerkörper 1′ vorhanden, und der Linsenkörper 10′ kann nicht mehr nach oben aus dem Trägerkörper 1′ herausgedrückt bzw. verlagert werden.

Wie in Figur 4 angedeutet, sind an der Außenseite des freien Endabschnittes 36′ des Hakenelementes 35′ Kontakte 27′ angeordnet, von denen aus sich Verbindungsleitungen zu der oder den gegebenenfalls im Linsenkörper 10′ vorhandenen, nicht dargestellten Lampen erstrecken, deren Lage und Wirkungsweise in den Figuren 1 bis 3 dargestellt und in Zusammenhang mit diesen beschrieben sind. Die Kontakte 37′ stehen bei sich in die Aufnahme 32′ erstreckendem freien Endbereich 36′ des Hakenelementes 35′ in Eingriff mit entsprechenden, in der Aufnahme 32′ vorgesehenen Kontakten, an die die Leitungen 33′ angeschlossen sind, die über die Leitung 4′ in Verbindung mit einer Spannungsquelle stehen.

## Patentansprüche

1. Meßlupenanordnung mit einem in einem Trägerkörper (1; 1′) gehaltenen Lupenkörper (10; 10′), der einen Zylinderabschnitt (12; 12′) und einen auf diesem vorgesehenen, bezüglich der Zylinderachse (14) rotationssymmetrischen, konvex gekrümmten Linsenabschnitt (11; 11′) aufweist, sowie mit einer koaxial zum Zylinderabschnitt (12; 12′) angeordneten Auswertespule (5) zur Erzeugung oder zur Auswertung eines Magnetfeldes, **dadurch gekennzeichnet**, daß der Lupenkörper (10; 10′) lösbar im Trägerkörper (1; 1′) gehalten ist und daß die Auswertespule (5) radial außerhalb des Verlaufs des Randstrahls (20) des Linsenabschnittes (11; 11′) im Trägerkörper (1; 1′) befestigt ist.

2. Meßlupenanordnung nach Anspruch 1, **dadurch gekennzeichnet**, daß der Lupenkörper (10; 10′) an seiner Unterseite ein Fadenkreuz (13) aufweist.

3. Meßlupenanordnung nach Anspruch 1 oder 2, **dadurch gekennzeichnet**, daß der in den Trägerkörper (1′) eingesetzte Linsenkörper (10′) in formschlüssigem Eingriff mit dem Trägerkörper (1′) steht.

4. Meßlupenanordnung nach Anspruch 3, **dadurch gekennzeichnet**, daß am unmittelbar oberhalb des Trägerkörpers (1′) liegenden Umfangsbereich des Lupenkörpers (10′) ein mit seinem freien Endabschnitt (36′) im wesentlichen in Umfangsrichtung des Lupenkörpers (10′) gerichtetes Hakenelement (35′) vorgesehen ist, dessen Endabschnitt (36′) in lösbarem Eingriff mit einer auf der Oberseite des Trägerkörpers (1′) vorgesehenen Aufnahme (32′) steht, die zumindest an der der Trägeroberseite gegenüberliegenden Seite einen Abstützbereich aufweist.

5. Meßlupenanordnung nach Anspruch 4, **dadurch gekennzeichnet**, daß das Hakenelement (35′) einstückig mit dem Lupenkörper (10′) ausgebildet ist.

6. Meßlupenanordnung nach Anspruch 4, **dadurch gekennzeichnet**, daß am Lupenkörper (10′) unterhalb des Hakenelementes (35′) ein Vorsprung (40′) ausgebildet ist, der sich bei eingesetztem Lupenkörper (10′) in eine in der Wandung der Trägerkörper-Aufnahmeöffnung (30′) für den Lupenkörper (10′) ausgebildete, nach oben offene Aussparung (31′) erstreckt, wobei sich der Vorsprung (40′) im Zustand der formschlüssigen Verbindung an einem Ende der Aussparung (31′) und bei getrennter formschlüssiger Verbindung am anderen Ende der Aussparung (31′) befindet.

7. Meßlupenanordnung nach einem der Ansprüche 1 bis 6, **dadurch gekennzeichnet**, daß im Zylinderabschnitt (12) im Bereich zwischen dessen Umfangsfläche und dem Verlauf des Randstrahls (20) des Linsenabschnittes (11) durch den Zylinderabschnitt (12) mindestens eine Lampe (19) vorgesehen ist und daß zumindest im Mittelbereich zwischen Zylinderabschnitt (12) und Linsenabschnitt (11) ein Luftspalt (15) ausgebildet ist und das von der Lampe (19) abgestrahlte Licht an der den Luftspalt (15) begrenzenden Fläche (16) des Zylinderabschnittes (12) totalreflektiert wird.

8. Meßlupenanordnung nach Anspruch 7, **dadurch gekennzeichnet**, daß der Luftspalt (15) zur Zylinderachse (14) rotationsymmetrisch ist.

9. Meßlupenanordnung nach Anspruch 7, **dadurch gekennzeichnet**, daß sich der Luftspalt (15) bis in den Bereich des Randstrahls (20) des Linsenabschnittes (11) erstreckt.

10. Meßlupenanordnung nach einem der Ansprüche 7 bis 9, **dadurch gekennzeichnet**, daß die den Luftspalt (15) begrenzende Fläche (16) des Zylinderabschnitts (12) konkav gekrümmt ist.

11. Meßlupenanordnung nach einem der Ansprüche 7 bis 10, **dadurch gekennzeichnet**, daß die mindestens eine Lampe (19) in einer im Zylinderabschnitt (12) ausgebildeten, radial nach außen offenen Ringnut (18) angeordnet ist.

12. Meßlupenanordnung nach einem der Ansprüche 7 bis 11, **gekennzeichnet** durch mehrere, einander paarweise diametral gegenüberliegende Lampen (19).

13. Meßlupenanordnung nach einem der Ansprüche 4 bis 6, **dadurch gekennzeichnet**, daß die Anschlußleitungen für die Lampe an an Außenflächen des freies Endabschnittes (36′) des Hakenelementes (35′) vorgesehenen Kontakten (37′) enden, die bei formschlüssiger Verbindung in Eingriff mit mit einer Spannungsquelle verbundenen Kontakten in der Aufnahme (32′) stehen.

## Claims

1. A measuring magnifier arrangement comprising a magnifying member (10; 10′) carried in a support member (1; 1′), which magnifying member (10; 10′) exhibits a cylindrical portion (12; 12′) and a convexly curved lens portion (11; 11′) provided thereon and rotationally symmetrical with respect to the cylinder axis (14), as well as comprising an evaluation coil (5) for generation or evaluation of a magnetic field, said evaluation coil (5) being arranged coaxially with respect to the cylindrical portion (12; 12′), characterized in that the magnifying member (10; 10′) is supported releasably in the support member (1; 1′) and in that the evaluation coil (5) is attached in the support member (1; 1′) radially outside the course of the marginal ray (20) of the lens portion (11; 11′).

2. A measuring magnifier arrangement according to claim 1, characterized in that the magnifying member (10; 10′) comprises a reticle (13) on its underside.

3. A measuring magnifier arrangement according to claim 1 or claim 2, characterized in that the lens member (10′) inserted into the support member (1′) is in positive engagement with the support member (1′).

4. A measuring magnifier arrangement according to claim 3, characterized in that a hook element (35′) with its free end portion (36′) oriented substantially in the circumferential direction of the magnifying member (10′) is provided at the circumferential area of the magnifying member (10′) lying directly above the support member (1′), the end portion (36′) of which hook element (35′) is in releasable engagement with a receptacle (32′) provided on the top of the support member (1′), which receptacle (32′) comprises a support area at least on the side opposite the support member top.

5. A measuring magnifier arrangement according to claim 4, characterized in that the hook element (35′) is of one-piece construction with the magnifying member (10′).

6. A measuring magnifier arrangement according to claim 4, characterized in that a projection (40′) is constructed on the magnifying member (10′) below the hook element (35′), which projection (40′) extends, when the magnifying member (10′) is inserted, into a recess (31′) open at the top and formed in the wall of the support member receiving opening (30′) for the magnifying member (10′), the projection (40′) being at one end of the recess (31′) in the positive connection state and at the other end of the recess (31′) when the positive connection is separated.

7. A measuring magnifier arrangement according to any one of claims 1 to 6, characterized in that at least one lamp (19) is provided in the cylinder portion (12) in the area between the circumferential surface thereof and the course of the marginal ray (20) of the lens portion (11) through the cylinder portion (12) and in that an air gap (15) is formed at least in the central area between cylinder portion (12) and lens portion (11) and the light emitted by the lamp (19) is totally reflected at the face (16) of the cylinder portion (12) defining the air gap (15).

8. A measuring magnifier arrangement according to claim 7, characterized in that the air gap (15) is rotationally symmetrical with respect to the cylinder axis (14).

9. A measuring magnifier arrangement according to claim 7, characterized in that the air gap (15) extends as far as into the area of the marginal ray (20) of the lens portion (11).

10. A measuring magnifier arrangement according to any one of claims 7 to 9, characterized in that the face (16) of the cylindrical portion (12) defining the air gap (15) is concavely curved.

11. A measuring magnifier arrangement according to any one of claims 7 to 10, characterized in that the at least one lamp (19) is arranged in a radially outwardly open annular groove (18) formed in the cylindrical portion (12).

12. A measuring magnifier arrangement according to any one of claims 7 to 11, characterized by a plurality of lamps (19) lying diametrically opposite each other in pairs.

13. A measuring magnifier arrangement according to any one of claims 4 to 6, characterized in that the connecting lines for the lamp end at contacts (37′) provided at outer surfaces of the free end portion (36′) of the hook element (35′), which contacts (37′) are in engagement with contacts located in the receptacle (32′) and connected with a voltage source when there is positive connection.

## Revendications

1. Dispositif de mesure à loupe avec un corps de loupe (10 ; 10′) maintenu dans un corps support (1 ; 1′) qui présente une section cylindrique (12 ; 12′) et une section en forme de lentille (11 ; 11′), cintrée de façon convexe, symétrique de révolution par rapport à l'axe du cylindre (14), prévue sur la précédente, ainsi qu'avec une bobine d'exploitation (5) disposée de façon coaxiale par rapport à la section cylindrique (12 ; 12′), servant à produire ou à exploiter un champ magnétique, caractérisé en ce que le corps de loupe (10 ; 10′) est maintenu de façon amovible dans le corps support (1 ; 1′) et en ce que la bobine d'exploitation (5) est fixée radialement en dehors du trajet du rayonnement marginal (20) de la section en forme de lentille (11 ; 11′) dans le corps support (1 ; 1′).

2. Dispositif de mesure à loupe selon la revendication 1, caractérisé en ce que le corps de loupe (10 ; 10′) présente sur sa face inférieure un réticule (13).

3. Dispositif de mesure à loupe selon la revendication 1 ou 2, caractérisé en ce que le corps en forme de lentille (10′) monté dans le corps support (1′) est en prise par engagement positif avec le corps support (1′).

4. Dispositif de mesure à loupe selon la revendication 3, caractérisé en ce que sur la zone périphérique du corps de loupe (10′) se trouvant directement au-dessus du corps support (1′) on prévoit un élément de crochet (35′) dirigé par sa section terminale libre (36′) essentiellement dans le sens périphérique du corps de loupe (10′), dont la section terminale (36′) se trouve en prise de façon amovible avec un logement (32′) prévu sur la face supérieure du corps support (1′), logement qui présente au moins sur le côté situé en regard de la face supérieure du support une zone d'appui.

5. Dispositif de mesure à loupe selon la revendication 4, caractérisé en ce que l'élément de crochet (35′) est constitué d'une seule pièce avec le corps de loupe (10′).

6. Dispositif de mesure à loupe selon la revendication 4, caractérisé en ce que sur le corps de loupe (10′) est constitué en dessous de l'élément de crochet (35′) une saillie (40′) qui s'étend quand le corps de loupe (10′) est monté dans un évidement (31′), ouvert vers le haut, constitué dans la paroi de l'ouverture du logement (30′) du corps support pour le corps de loupe (10′), la saillie (40′), quand la liaison est en état d'engagement positif, se trouvant à une extrémité de l'évidement (31′) et quand l'engagement positif de la liaison est défait, la saillie se trouvant à l'autre extrémité de l'évidement (31′).

7. Dispositif de mesure à loupe, selon l'une des revendications 1 à 6, caractérisé en ce que dans la section cylindrique (12) on prévoit au moins une lampe (19) dans la zone comprise entre sa surface périphérique et le trajet du rayonnement marginal (20) de la section en forme de lentille (11) à travers la section cylindrique (12) et en ce qu'au moins dans la zone médiane comprise entre la section cylindrique (12) et la section en forme de lentille (11), on constitue une fente d'air (15) et en ce que la lumière rayonnée par la lampe (19) est totalement réfléchie sur la surface (16) de la section cylindrique (12) délimitant la fente d'air (15).

8. Dispositif de mesure à loupe, selon la revendication 7, caractérisé en ce que la fente d'air (15) est symétrique de révolution par rapport à l'axe cylindrique (14).

9. Dispositif de mesure à loupe selon la revendication 7, caractérisé en ce que la fente d'air (15) s'étend jusque dans la zone du rayonnement marginal (20) de la section en forme de lentille (11).

10. Dispositif de mesure à loupe selon l'une des revendications 7 à 9, caractérisé en ce que la surface (16) de la section cylindrique (12) adjacente à la fente d'air (15) est cintrée de façon concave.

11. Dispositif de mesure à loupe selon l'une des revendications 7 à 10, caractérisé en ce que l'une au moins des lampes (19) est disposée dans une rainure annulaire (18) ouverte radialement vers l'extérieur, constituée dans la section cylindrique (12).

12. Dispositif de mesure à loupe, selon l'une des revendications 7 à 11, caractérisé par plusieurs lampes (19) situées diamétralement en regard les unes des autres par paires.

13. Dispositif de mesure à loupe selon l'une des revendications 4 à 6, caractérisé en ce que les lignes de raccordement pour la lampe se terminent à des contacts (37′) prévus sur les surfaces extérieures de la section terminale libre (36′) de l'élément de crochet (35′), contacts (37′) qui lors de la liaison par engagement positif, sont en prise avec des contacts dans le logement (32′) reliés à une source de tension.
